# EUROPEAN PATENT APPLICATION

(11) **EP 2 849 392 A1**
(43) Date of publication of application: **18.03.2015**
(21) Application number: 14184506.5
(22) Date of filing: 11.09.2014
(51) Int. Cl.: H04L 12/58

(54) **Method for notifying arrival of incoming communication and electronic device thereof**

(30) Priority: 13.09.2013 KR 20130110704
(71) Applicant: Samsung Electronics Co., Ltd, Gyeonggi-do 443-742 (KR)
(72) Inventor: Won, Sung-Joon, Gyeonggi-do (KR); Kwon, Joong-Hun, Seoul (KR)
(74) Representative: Nederlandsch Octrooibureau

(57) **Abstract**

Methods and apparatus are provided for performing an incoming notification in an electronic device. An incoming communication is received. An importance of the incoming communication is determined based on stored contact-related information. An incoming notification level is regulated according to the importance of the incoming communication.

## Description

### BACKGROUND OF THE INVENTION

### 1. Field of the Invention

The present invention relates generally to notifications of an electronic device, and more particularly, to a method and apparatus for providing a notification of an arrival of an incoming communication at an electronic device.

### 2. Description of the Related Art

Widely used electronic devices such as, for example, portable terminals, mobile terminals, and smart phones, can allow a user to recognize arrival of an incoming communication or a message through a bell sound or a vibration at the arrival of the incoming communication or the message. A bell sound volume or a vibration strength can be regulated by a user.

In particular, in a bell sound mode, an output volume of a sound output through a speaker of the electronic device is regulated by the user, so that the bell sound volume is set to a low level in a quiet indoor environment and is set to a maximum level in a noisy place.

In addition, a vibration mode is used to operate a vibration motor in the electronic device so that the entire electronic device vibrates by an eccentric rotor joined to a rotational axis of the vibration motor. In this manner, the user can recognize an incoming signal while preventing others from being disturbed with a sound. A vibration strength can also be set manually by the user.

### SUMMARY OF THE INVENTION

The present invention has been made to address at least the above problems and/or disadvantages and to provide at least the advantages described below. Accordingly, an aspect of the present invention provides a method and an apparatus for regulating a bell sound volume or a vibration strength according to an importance of an incoming communication in an electronic device.

Another aspect of the present invention provides a method and an apparatus for automatically changing an incoming notification configuration so that a user does not miss an important incoming communication in an electronic device.

In accordance with an aspect of the present invention, a method is provided for providing an incoming notification in an electronic device. An incoming communication is received. An importance of the incoming communication is determined based on stored contact-related information. An incoming notification level is regulated according to the importance of the incoming communication.

In accordance with another aspect of the present invention, an apparatus is provided for providing an incoming notification of an electronic device. The apparatus includes a Radio Frequency (RF) unit configured to receive an incoming communication. The apparatus also includes a controller configured to determine an importance of the incoming communication based on stored contact-related information, and regulate an incoming notification level according to the importance of the incoming communication.

In accordance with another aspect of the present invention, an electronic device is provided. The electronic device includes at least one processor, at least one memory, and at least one program stored in the memory and configured to be executable by the at least one processor. The program includes instructions for receiving an incoming communication, determining an importance of the incoming communication based on stored contact-related information, and regulating an incoming notification level according to the importance of the incoming communication.

### BRIEF DESCRIPTION OF THE DRAWINGS

The above and other aspects, features, and advantages of the present invention will be more apparent from the following detailed description when taken in conjunction with the accompanying drawings, in which:
FIG. 1 is a diagram illustrating a user interface for regulating a bell sound volume and a vibration strength, according to an embodiment of the present invention;
FIG. 2 is a flowchart illustrating a method of notifying of an incoming communication in an electronic device, according to an embodiment of the present invention;
FIG. 3 is a flowchart illustrating a method of notifying of an incoming communication corresponding to a schedule event or a task event in an electronic device, according to an embodiment of the present invention;
FIG. 4 is a flowchart illustrating a method of notifying of an incoming communication when there is a missed incoming communication from a different member related to a schedule event or a task event in an electronic device, according to an embodiment of the present invention;
FIG. 5 is a flowchart illustrating a method of notifying of an incoming communication when there is a missed incoming communication from a different member related to a schedule event or a task event in an electronic device, according to another embodiment of the present invention;
FIG. 6 is a flowchart illustrating a method of notifying of an incoming communication when there is a missed incoming communication to different contact information of the same recipient in an electronic device, according to an embodiment of the present invention;
FIG. 7 is a flowchart illustrating a method of notifying of an incoming communication based on the number of missed incoming communications of the same recipient in an electronic device, according to an embodiment of the present invention;
FIG. 8 is a flowchart illustrating a notification method based on an importance of contact information corresponding to an incoming communication in an electronic device, according to an embodiment of the present invention;
FIG. 9 is a diagram illustrating input contact information, according to an embodiment of the present invention; and
FIG. 10 is a block diagram of an electronic device, according to an embodiment of the present invention.

### DETAILED DESCRIPTION OF EMBODIMENTS OF THE PRESENT INVENTION

Embodiments of the present invention are described in detail with reference to the accompanying drawings. The same or similar component may be designated by the same or similar reference numerals although they are illustrated in different drawings. Detailed descriptions of constructions or processes known in the art may be omitted to avoid obscuring the subject matter of the present invention. Also, the terms used herein are defined according to the functions of the present invention. Thus, the terms may vary depending on user's or operator's intention and usage. That is, the terms used herein must be understood based on the descriptions made herein.

Embodiments of the present invention relate to a method for regulating a bell sound volume or a vibration strength associated with an incoming communication according to an importance of the incoming communication and an electronic device thereof.

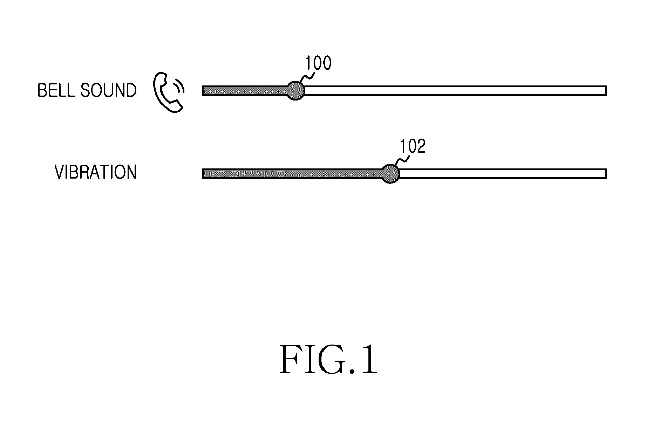

FIG. 1 is a diagram illustrating a user interface for regulating a bell sound volume and a vibration strength, according to an embodiment of the present invention.

Referring to FIG. 1, the bell sound volume or the vibration strength may be controlled by using a touch-and-drag or a hardware volume control button.

For example, a scroll bar may move to a desired position 100 in a right direction to increase the bell sound volume, and may move to a desired position 102 in the right direction to increase the vibration strength. The scroll bar may move in a left direction to decrease the bell sound volume, and may move in the left direction to decrease the vibration strength.

As such, the bell sound volume and the vibration strength are set by a user input. When an incoming event occurs at a later time, such as an arrival time of an incoming communication or a message, an incoming notification may be provided with a pre-set bell sound volume or vibration strength.

The incoming notification may operate by being classified into a sound mode, a vibration mode, and a silence mode, according to a user selection. For example, the incoming notification is performed with a bell sound in the sound mode, with a vibration in the vibration mode, and with a lamp flickering in the silence mode. In an embodiment of the present invention, the incoming notification may be performed with the vibration followed by bell ringing or with the bell ringing followed by the vibration.

However, in the vibration mode or the silence mode, the user may not recognize the notification, and thus, miss the incoming call or the message arrival due to a surrounding environment. Specifically, if a surrounding area is noisy or the user puts the electronic device in a bag or a pocket, an incoming notification in the vibration mode or the silence mode may not be delivered to the user. Even if the incoming notification is performed through the bell ringing in the sound mode, the user may not be able to recognize the bell ringing when the bell sound volume is set too low.

In an embodiment of the present invention, even if the incoming mode (e.g., the sound mode, the vibration mode, the silence mode, the bell ringing followed by the vibration, and the vibration followed by the bell ringing) and the bell sound volume or the vibration strength are pre-determined by the user, the incoming notification is performed by changing the incoming mode according to an importance of the incoming communication or the message, or by changing the bell sound volume or the vibration strength to a maximum level or to a value greater than a pre-set value, so that the user does not miss the important incoming communication or message arrival.

In an embodiment of the present invention, an incoming notification level is defined by combining the bell sound and the vibration strength. For example, if it is assumed that the bell sound volume is regulated from 1 to N and the vibration strength is regulated from 1 to M, the incoming notification level can be classified to up to N×M levels.

In an embodiment of the present invention, the incoming notification level may be defined by combining the incoming mode, the bell sound, the vibration strength, and the lamp flickering. If it is assumed that the bell sound volume is regulated from 1 to N, the vibration strength is regulated from 1 to M, the lamp flickering is regulated from 1 to O, then the incoming notification level can be classified to up to N×M×O levels.

For example, if the incoming notification level is 1, it implies a maximum level at which a bell sound of a maximum volume and a vibration of a maximum strength are ringing simultaneously. If the incoming notification level is N, it may be defined variously as a minimum level at which an incoming notification is achieved only with a lamp flickering in the silence mode.

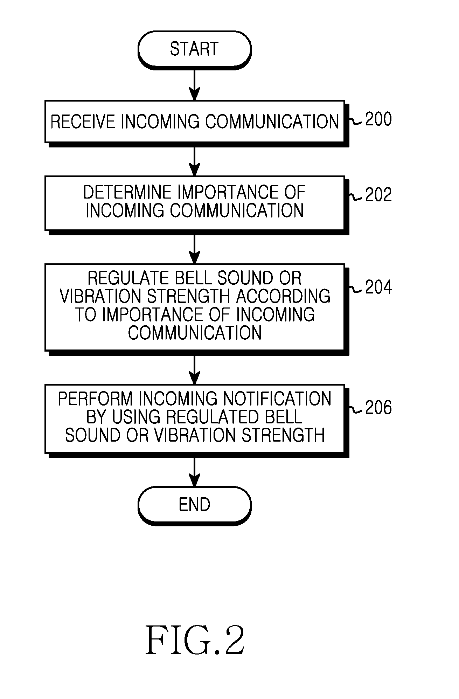

FIG. 2 is a flowchart illustrating a method of notifying of an incoming communication in an electronic device, according to an embodiment of the present invention.

Referring to FIG. 2, in step 200, the electronic device receives the incoming communication. The incoming communication may be any one of an incoming call, a Short Message Service (SMS) message or Multimedia Message Service (MMS) message, a Social Networking Service (SNS) message, and an e-mail.

In step 202, the electronic device determines an importance of the received incoming communication. For example, the importance of the incoming communication may be determined according whether it is an incoming communication from a member related to a schedule event or task event pre-registered to a schedule management application of the electronic device, whether there is a missed incoming communication from a different member related to the schedule event or task event pre-registered to the schedule management application of the electronic device, the number of missed incoming communications among incoming communications received via multiple contact information of the same recipient, and an importance of contact information corresponding to the received incoming communication. For example, a user can register a schedule or a task in advance through the schedule management application, and when registered, at least one member, date, time, and related content in association with the schedule or the task may be recorded. The member may be recorded as one of a name, a phone number, an SNS IDentifier (ID), an e-mail address, and a messenger ID, or may be selected from a contact list.

In step 204, according to an importance of the received incoming communication, the electronic device changes an incoming mode, or regulates a volume of a bell sound, a level of a vibration strength, or a speed of a lamp flickering.

For example, if the incoming communication is from the member related to the schedule event or task event pre-registered to the schedule management application of the electronic device, it may be changed to a maximum incoming notification level or to an incoming notification level that is higher than a current incoming notification level by at least one level. On the other hand, if the incoming communication is not related to the schedule event or task event pre-registered to the schedule management application of the electronic device, it may operate with a pre-set incoming notification level.

Likewise, if there is missed incoming communication from the different member related to the schedule event or task event pre-registered to the schedule management application of the electronic device, it may be changed to the maximum incoming notification level or to the incoming notification level that is higher than the current incoming notification level by at least one level. If there is no missed incoming communication from the different member related thereto, it may operate with the pre-set incoming notification level.

In an embodiment of the present invention, if there is missed incoming communication via different contact information of the same recipient, it may be changed to the maximum incoming notification level or to the incoming notification level that is higher than the current incoming notification level by at least one level. If there is no incoming communication through the different contact information of the same recipient, it may operate with the pre-set incoming notification level.

In another embodiment of the present invention, if the number of missed incoming communications received via multiple contact information of the same recipient is greater than or equal to a threshold, it may be changed to the maximum incoming notification level or to the incoming notification level that is higher than the current incoming notification level by at least one level. If the number of missed incoming communications received via the multiple contact information of the same recipient is less than the threshold, it may operate with the pre-set incoming notification level.

In another embodiment of the present invention, if it is determined that contact information corresponding to the received incoming communication is important, it may be changed to the maximum incoming notification level or to the incoming notification level that is higher than the current incoming notification level by at least one level.

In step 206, the electronic device performs the incoming notification with a bell sound volume or vibration strength regulated in the incoming mode.

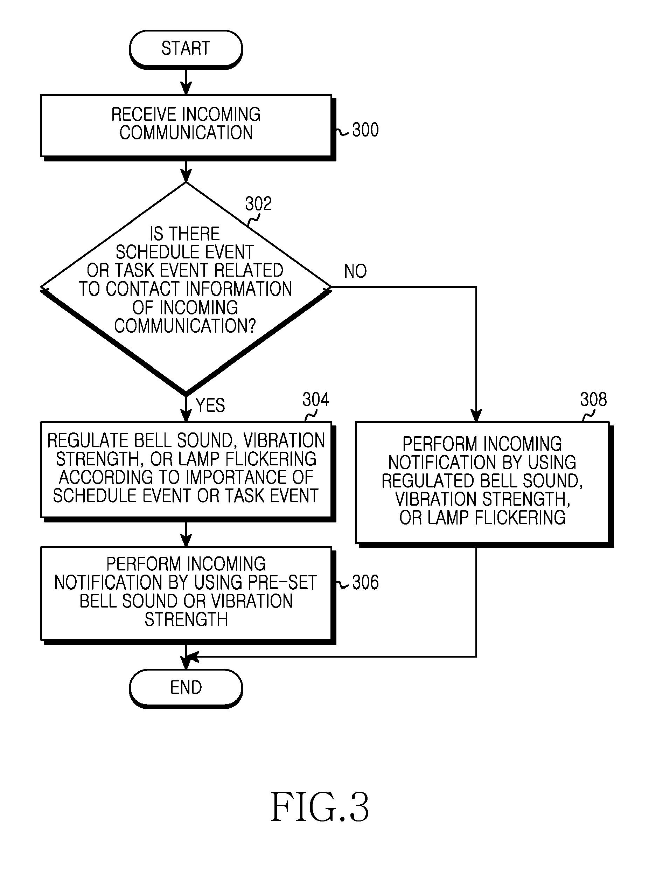

FIG. 3 is a flowchart illustrating a method of notifying of an incoming communication corresponding to a schedule event or a task event in an electronic device, according to an embodiment of the present invention.

Referring to FIG. 3, in step 300, the electronic device receives the incoming communication. The incoming communication may be any one of an incoming call, an SMS message or MMS message, an SNS message, and an e-mail.

In step 302, the electronic device determines whether there is a schedule event or task event related to contact information corresponding to the incoming communication. For example, a schedule management program may be used to prestore at least one piece of member information (e.g., a member name, an e-mail address, a messenger ID, an SNS ID, and a phone number) related to a date, time, and place regarding a related event in a database of the electronic device. In another embodiment of the present invention, schedule management information may be pre-stored in the electronic device by being obtained from an external server. Herein, member information related to the schedule or task event may be selected or directly input by a user by using a contact list of the electronic device.

Specifically, in step 302, the electronic device determines whether a sender corresponding to the incoming communication is a member included in the schedule event or task event, on the basis of a pre-stored specific database. If the schedule event or the task event is over, it may operate with a pre-set incoming notification level.

When there is an event related to contact information of the incoming communication, the electronic device regulates the incoming notification level according to an importance of the event, in step 304. For example, at least one of a bell sound, a vibration strength, and a lamp flickering may be regulated, and the incoming notification level may be increased by at least one level.

For example, an increment of the incoming notification level may be increased when the importance of the event is increased, and may be decreased when the importance of the event is decreased. In another embodiment of the present invention, instead of the importance of the event, the incoming notification level may be regulated according to a location or importance of a member related to the event. For example, if the member is a co-worker, the increment of the incoming notification level may be low, and if the member is a boss, the increment of the incoming notification level may be high.

In an embodiment of the present invention, the increment of the incoming notification level may be pre-set by the user, or may be influenced by surrounding environmental noise (e.g., the increment is high in a noisy environment, and is low in a quiet environment) of the electronic device, a location (e.g., it operates in a vibration mode in a cinema) of the electronic device, and a distance (e.g., if a distance between the user and the electronic device is great, the increment is high, and if the distance between the user and the electronic device is small, the increment is low) between the user and the electronic device. For example, although the surrounding environmental noise may be measured by using a microphone of the electronic device, embodiments of the present invention are not limited to a noise measuring method using a microphone, and thus, various methods may also be used for measuring. In addition, the distance between the user and the electronic device may be measured by using a Bluetooth Low Energy (BLE) tag or a distance measuring sensor. However, embodiments of the present invention are not limited to the distance measuring method using the BLE tag or the distance measuring sensor, and thus, various methods may also be used for measuring.

In another embodiment of the present invention, when there is an event related to contact information of the incoming communication, it may be regulated by using a bell sound volume, a vibration strength, or a lamp flickering corresponding to a maximum incoming notification level.

In step 306, the electronic device performs the incoming notification at the regulated incoming notification level.

If there is no event related to the contact information of the incoming communication, the incoming notification is performed by using the pre-set bell sound volume or vibration strength, in step 308.

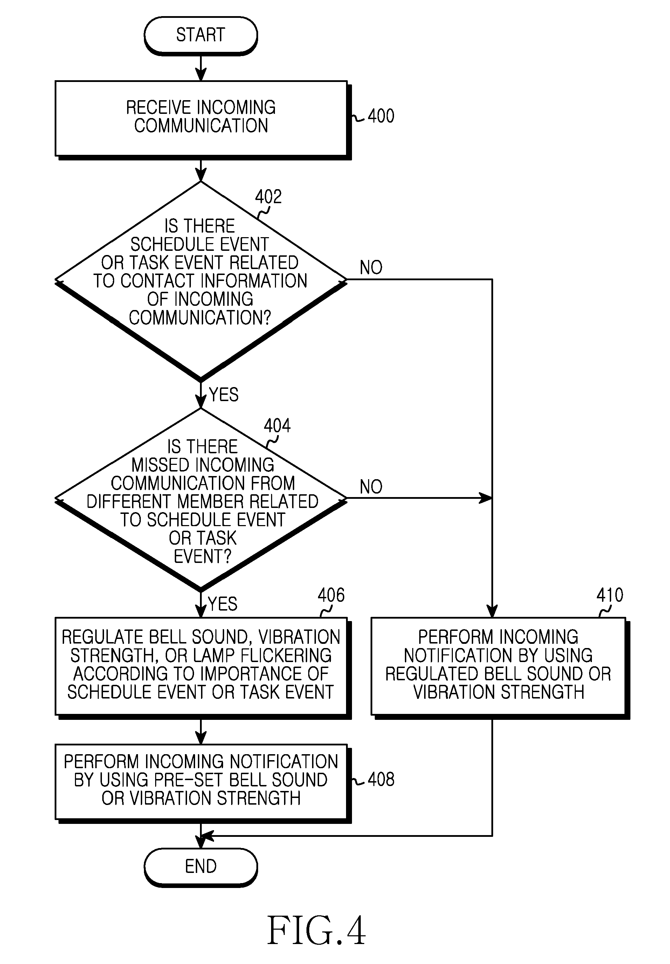

FIG. 4 is a flowchart illustrating a method of notifying of an incoming communication when there is a missed incoming communication from a different member related to a schedule event or a task event in an electronic device, according to an embodiment of the present invention.

Referring to FIG. 4, in step 400, the electronic device receives the incoming communication. The incoming communication may be any one of an incoming call, an SMS message or MMS message, an SNS message, and an e-mail.

In step 402, the electronic device determines whether there is a schedule event or task event related to contact information corresponding to the incoming communication, as described with respect to step 302 above.

When there is an event related to contact information of the incoming communication, the electronic device determines whether there is a missed incoming communication from a different member related to a schedule event or a task event, in step 404. For example, this is a case where a first member and a second member are related to the schedule event or the task event, an incoming communication from the second member is not received previously, and an incoming communication from the first member is currently being received.

If there is a missed incoming communication from the different member related to the schedule event or the task event, the electronic device regulates an incoming notification level according to an importance of an event, in step 406, as described above with respect to step 304.

In step 408, the electronic device performs the incoming notification at the regulated incoming notification level.

If there is no event related to the contact information of the incoming communication or if there is no missed incoming communication from the different member related to the schedule event or the task event, the incoming notification is performed by using the pre-set bell sound volume or vibration strength, in step 410.

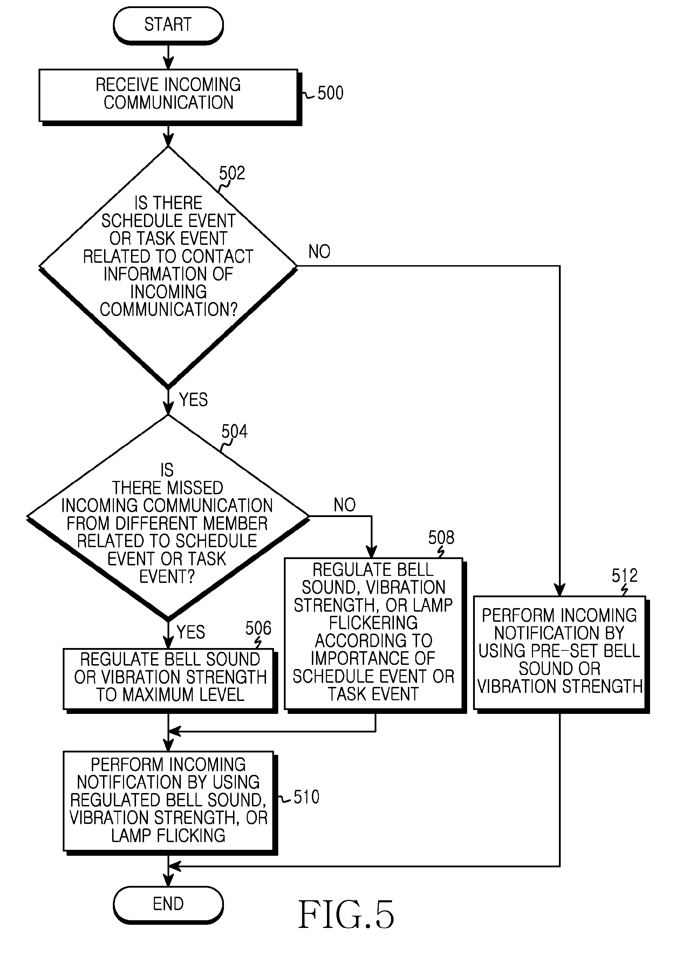

FIG. 5 is a flowchart illustrating a method of notifying of an incoming communication when there is a missed incoming communication from a different member related to a schedule event or a task event in an electronic device, according to another embodiment of the present invention.

In step 500, the electronic device receives the incoming communication. The incoming communication may be any one of an incoming call, an SMS message or MMS message, an SNS message, and an e-mail.

In step 502, the electronic device determines whether there is a schedule event or task event related to contact information corresponding to the incoming communication, as described in step 302 above.

When there is an event related to contact information of the incoming communication, the electronic device determines whether there is a missed incoming communication from a different member related to a schedule event or a task event, in step 504. For example, this is a case where a first member and a second member are related to the schedule event or the task event, an incoming communication from the second member is not received previously, and an incoming communication from the first member is currently being received.

If there is a missed incoming communication from the different member related to the schedule event or the task event, the electronic device increases an incoming notification level to up to a maximum incoming notification level, in step 506.

If there is not a missed incoming communication from the different member related to the schedule event or the task event, the electronic device regulates the incoming notification level according to an importance of the event, in step 508, as described above with respect to step 304.

In step 510, the electronic device performs the incoming notification at the regulated incoming notification level.

If there is no event related to the contact information of the incoming communication, the incoming notification is performed by using the pre-set bell sound volume or vibration strength, in step 512.

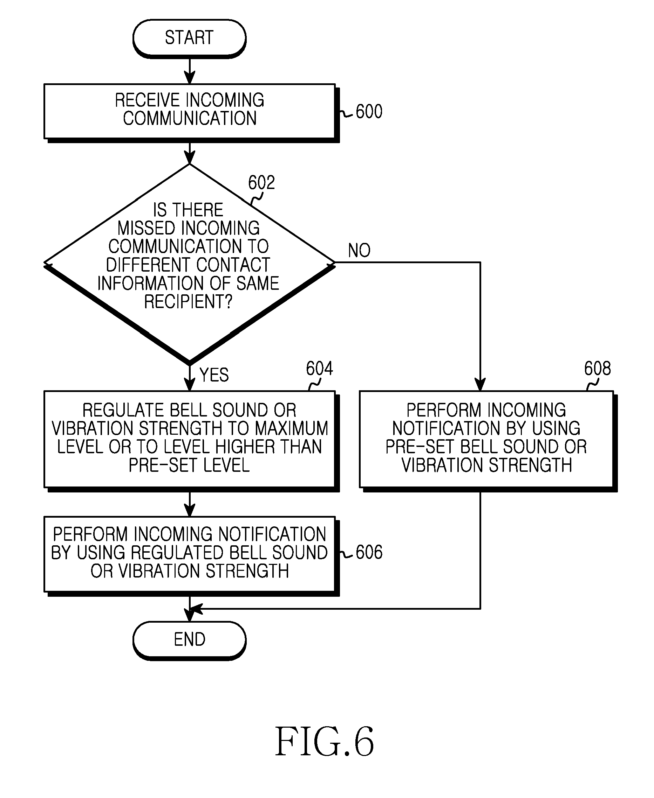

FIG. 6 is a flowchart illustrating a method of notifying of an incoming communication when there is a missed incoming communication to different contact information of the same recipient in an electronic device, according to an embodiment of the present invention.

In step 600, the electronic device receives the incoming communication.The incoming communication may be any one of an incoming call, an SMS message or MMS message, an SNS message, and an e-mail.

In step 602, the electronic device determines whether there is a missed incoming communication to different contact information of the same recipient. Specifically, in order for a recipient to confirm whether an e-mail or a message is received after a sender communicates with the recipient by using the e-mail or the messenger, the same sender may attempt a phone communication to the same recipient.

If there is the missed incoming communication to the different contact information of the same recipient, in other words, if an asynchronous incoming communication such as an e-mail or a messenger from a sender corresponding to a currently received incoming communication is not previously received by a user, the electronic device regulates a bell sound or a vibration strength to a maximum size or to a level higher than a pre-set level, in step 604. That is, it may be changed to a maximum incoming notification level or to an incoming notification level higher than a current incoming notification level by at least one level.

In step 606, the electronic device performs the incoming notification at the regulated incoming notification level.

If there is no missed incoming communication to the different contact information of the same recipient, in other words, if an asynchronous incoming communication such as an e-mail or a messenger from a sender corresponding to a currently received incoming communication is previously received by a user, the electronic device may perform the incoming notification by using the pre-set bell sound volume or vibration strength, in step 608.

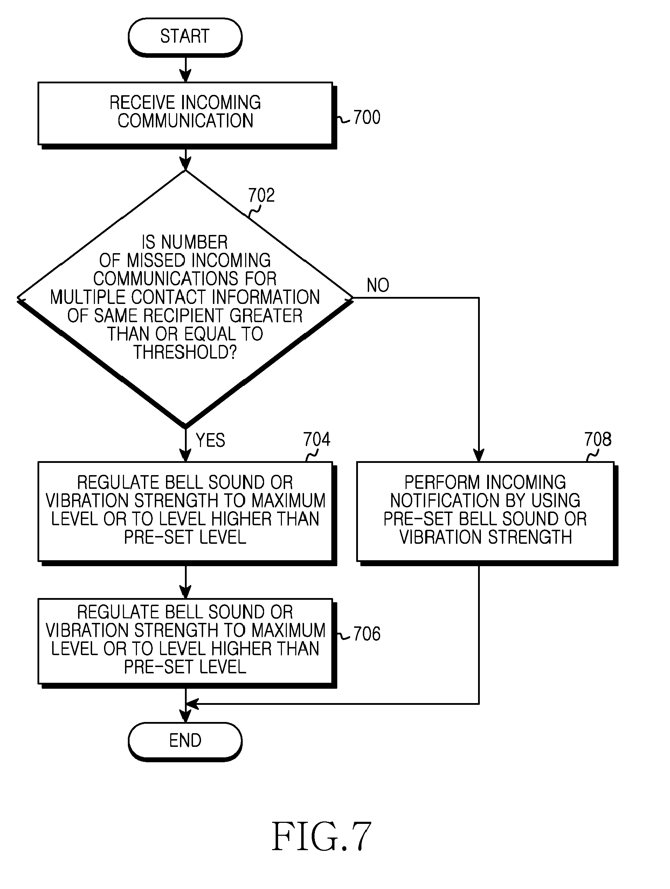

FIG. 7 is a flowchart illustrating a method of notifying of an incoming communication based on the number of missed incoming communications of the same recipient in an electronic device, according to an embodiment of the present invention.

Referring to FIG. 7, in step 700, the electronic device receives the incoming communication. The incoming communication may be any one of an incoming call, an SMS message or MMS message, an SMS message, and an e-mail.

In step 702, the electronic device determines whether the number of missed incoming communications for multiple contact information of the same recipient from at least one sender is greater than or equal to a threshold. For example, the at least one sender may attempt a communication by using various different communication methods for the same recipient. For example, a first sender may attempt a communication to the same recipient via a messenger, a second sender attempts a communication to the same recipient via an SNS or an e-mail, and a third sender may attempt a phone communication. In this case, an electronic device of the same recipient may count the number of incoming communications not received by the recipient during the received incoming communication.

If the number of missed incoming communications for multiple contact information of the same recipient is greater than or equal to a threshold, the electronic device regulates a bell sound or a vibration strength to a maximum size or to a level higher than a pre-set level, in step 704. That is, it may be changed to a maximum incoming notification level or to an incoming notification level that is higher than a current incoming notification level by at least one level.

In step 706, the electronic device performs the incoming notification at the regulated incoming notification level.

Otherwise, if the number of missed incoming communications for the multiple contact information of the same recipient is less than the threshold, the incoming notification may be performed by using the pre-set bell sound volume or vibration strength, in step 708.

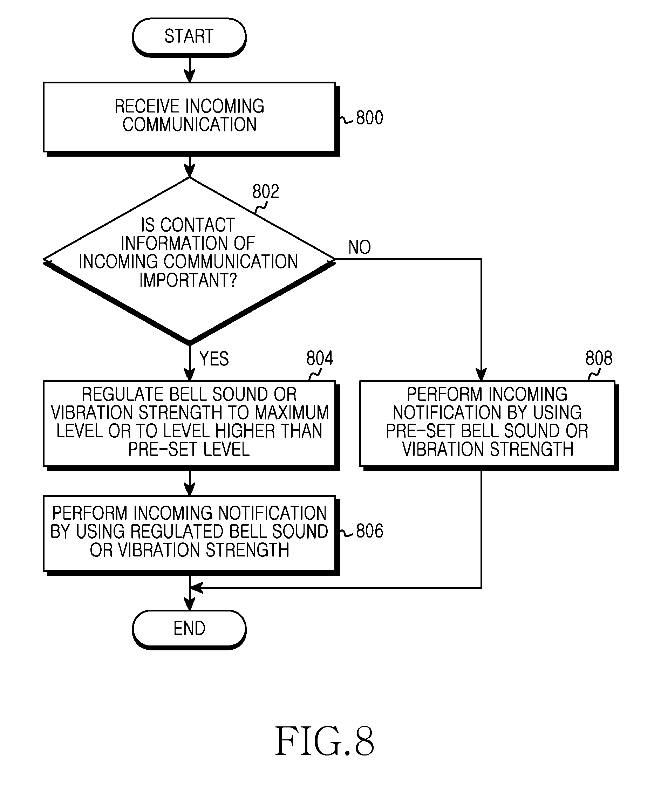

FIG. 8 is a flowchart illustrating a notification method based on an importance of contact information corresponding to an incoming communication in an electronic device, according to an embodiment of the present invention.

Referring to FIG. 8, in step 800, the electronic device receives the incoming communication.The incoming communication may be any one of an incoming call, an SMS message or MMS message, an SMS message, and an e-mail.

In step 802, the electronic device determines whether contact information of the incoming communication is important. Specifically, it is determined whether a sender's contact information corresponding to the incoming communication is important. Herein, a score corresponding to an importance for a case where a user creates contact information may be specified for an importance of the sender's contact information. In an embodiment of the present invention, the importance may be determined by a combination of items of contact information such as a user relation, a group, and an organization. For example, the importance may be increased when closely related, and the importance may be decreased when distantly related.

If the electronic device determines that the contact information of the incoming communication is important, that is, if the importance is greater than or equal to a threshold, the electronic device regulates a bell sound or a vibration strength to a maximum size or to a level higher than a pre-set level, in step 704. That is, it may be changed to a maximum incoming notification level or to an incoming notification level that is higher than a current incoming notification level by at least one level.

A method for providing a incoming notification in an electronic device, the method comprising the steps of:
receiving an incoming communication;
determining an importance of the incoming communication based on stored contact-related information; and
regulating an incoming notification level according to the importance of the incoming communication.
wherein determining the importance of the incoming communication comprises determining whether contact information corresponding to the incoming communication coincides with contact information corresponding to at least one member related to a registered schedule or task, and
wherein regulating the incoming notification level comprises:
   when the contact information corresponding to the incoming communication coincides with the contact information corresponding to the at least one member, performing the incoming notification by increasing the incoming notification level by at least one level higher than a currently configured incoming notification level; or
   when the contact information corresponding to the incoming communication does not coincide with the contact information corresponding to the at least one member, performing the incoming notification with the currently configured incoming notification level.
wherein determining the importance of the incoming communication comprises:
   determining whether contact information corresponding to the incoming communication coincides with contact information corresponding to at least one member related to a registered schedule or task; and
   when the contact information corresponding to the incoming communication coincides with the contact information corresponding to the at least one member, determining whether there is a missed incoming communication from at least one different member related to the registered schedule or task, and
wherein regulating the incoming notification level comprises:
   when there is the missed incoming communication from the at least one different member, performing the incoming notification by increasing the incoming notification level by at least one level higher than a currently configured incoming notification level; and
   when the contact information corresponding to the incoming communication does not coincide with the contact information corresponding to the at least one member or when there is no missed incoming communication from the at least one different member, performing the incoming notification with the currently configured incoming notification level.
   wherein determining the importance of the incoming communication comprises:
      determining whether contact information corresponding to the incoming communication coincides with contact information corresponding to at least one member related to a registered schedule or task; and
      when the contact information corresponding to the incoming communication coincides with the contact information corresponding to the at least one member, determining whether there is a missed incoming communication from at least one different member related to the registered schedule or task, and
   wherein regulating the incoming notification level comprises:
      when there is the missed incoming communication from the at least one different member, performing the incoming notification by increasing the incoming notification level to a maximum incoming notification level;
      when there is no missed incoming communication from the at least one different member, performing the incoming notification by increasing the incoming notification level by at least one level higher than a currently configured incoming notification level; and
      when the contact information corresponding to the incoming communication does not coincide with the contact information corresponding to the at least one member, performing the incoming notification with the currently configured incoming notification level.
      wherein determining the importance of the incoming communication comprises determining whether there is a different incoming communication not received by different contact information of the same recipient, and
   wherein regulating the incoming notification level comprises:
      when there is the incoming communication not received by the different contact information of the same recipient, performing the incoming notification by increasing the incoming notification level by at least one level higher than a currently configured incoming notification level; and
      when there is no incoming communication not received by the different contact information of the same recipient, performing the incoming notification with the currently configured incoming notification level.
   wherein the incoming communication is a phone communication, and the different incoming communication is an e-mail.
   wherein determining the importance of the incoming communication comprises determining an amount of missed incoming communications from multiple contact information of the same recipient, and
   wherein regulating the incoming notification level comprises:
      if the amount of missed incoming communications is greater than or equal to a threshold, performing the incoming notification by increasing the incoming notification level by at least one level higher than a currently configured incoming notification level; and
      if the amount of missed incoming communications is less than the threshold, performing the incoming notification with the currently configured incoming notification level.
      wherein determining the importance of the incoming communication comprises determining an importance for contact information corresponding to the incoming communication, and
   wherein regulating the incoming notification level comprises:
      if the importance for the contact information is greater than or equal to a threshold, performing the incoming notification by increasing the incoming notification level by at least one level higher than a currently configured incoming notification level; and
      if the importance of the contact is less than the threshold, performing the incoming notification with the currently configured incoming notification level.
      wherein the incoming communication is one of a phone communication, an e-mail, a Social Networking Service (SNS) message, a Short Message Service (SMS) message, and a Multimedia Message Service (MMS) message.
      wherein the incoming notification level is determined as combination of a bell sound volume, a vibration strength, and a lamp flickering.

In step 806, the electronic device performs the incoming notification at the regulated incoming notification level, in step 806.

Otherwise, if the electronic device determines that contact information of an incoming communication is not important, the incoming notification may be performed by using the pre-set bell sound volume or vibration strength, in step 808.

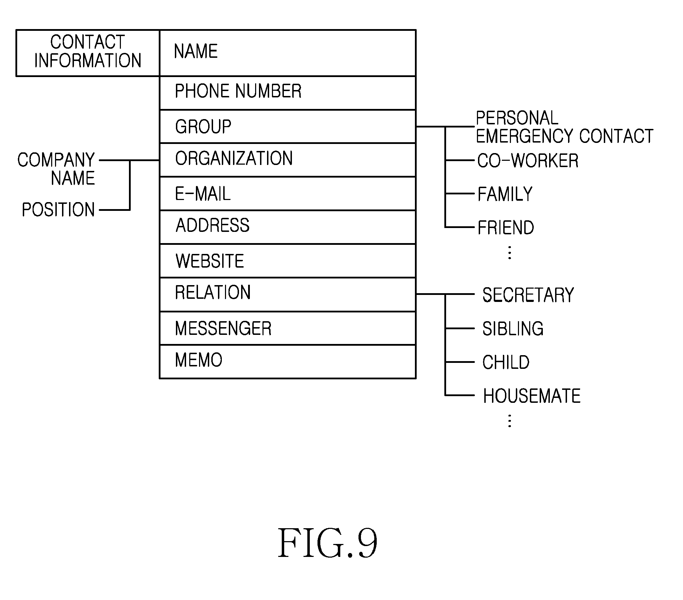

FIG. 9 is a diagram illustrating input contact information, according to an embodiment of the present invention.

Referring to FIG. 9, items included when the contact information is created are illustrated.

For example, the contact information may include a name, a phone number, a group, an organization, an e-mail, an address, a website, a relation, a messenger, and a memo. The contact information may further include information indicating an importance of the contact information, according to an embodiment of the present invention.

In addition, the items included in the contact information are not limited thereto, and thus, additional items may be further included or omitted.

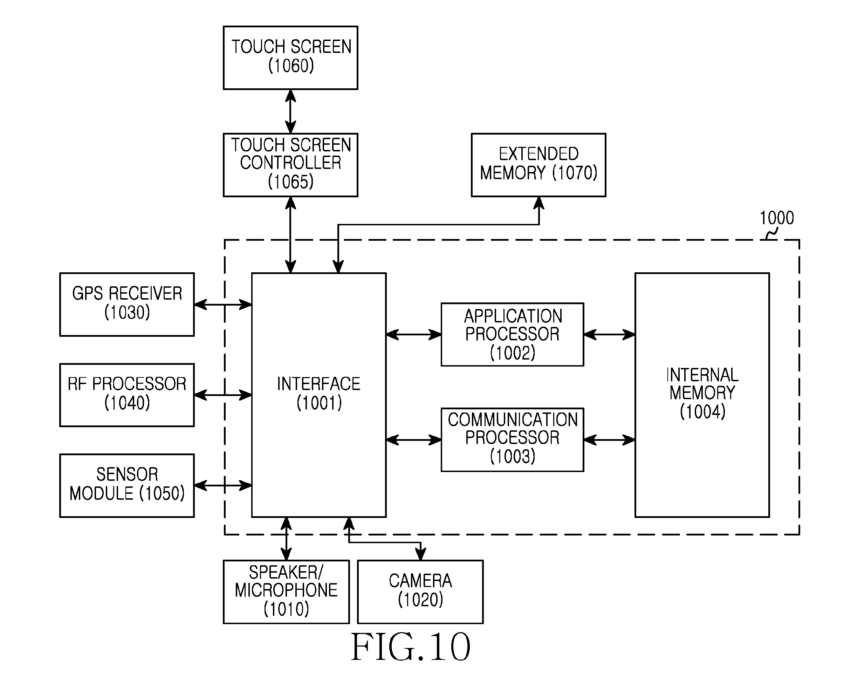

FIG. 10 is a block diagram illustrating an electronic device, according to an embodiment of the present invention.

The electronic device may be embodied as a device such as, for example, a portable terminal, a mobile phone, a mobile pad, a media player, a tablet computer, a hand-held computer, or a Personal Digital Assistance (PDA), a server, a personal computer, etc. In addition, the electronic device may be any electronic device including a device that combines two or more functions of the aforementioned devices.

Referring to FIG. 10, the electronic device includes a controller 1000, a speaker/microphone 1010, a camera 1020, a Global Positioning System (GPS) receiver 1030, a Radio Frequency (RF) processor 1040, a sensor module 1050, a touch screen 1060, a touch screen controller 1065, and an extended memory 1070.

The controller 1000 includes an interface 1001, one or more processors 1002 and 1003, and an internal memory 1004. The entire processor 1000 may be referred to as a processor. The interface 1001, the application processor 1002, the communication processor 1003, and the internal memory 1004 may be separate components or may be configured in one or more integrated circuits.

The application processor 1022 performs various functions for the electronic device by executing a variety of software programs. The communication processor 1003 processes and controls voice communication and data communication. In addition to such a typical function, the processors 1002 and 1003 also take a role of executing a specific software module (i.e., an instruction set) stored in the extended memory 1070 or the internal memory 1004, and thus, perform various specific functions corresponding to the module. That is, the processors 1002 and 1003 may perform the notification method for an incoming communication of the electronic device by interworking with software modules stored in the extended memory 1070 or the internal memory 1004.

For example, the application processor 1002 may receive an incoming communication. The incoming communication may be any one of an incoming call, an SMS message or MMS message, an SMS message, and an e-mail. Further, the application processor 1002 may determine an importance of the received incoming communication. For example, the importance of the incoming communication may be determined according whether it is an incoming communication from a member related to a schedule event or task event pre-registered to a schedule management application of the electronic device, whether there is a missed incoming communication from a different member related to the schedule event or task event pre-registered to the schedule management application of the electronic device, the number of missed incoming communications among incoming communications received via multiple contact information of the same recipient, and an importance of contact information corresponding to the received incoming communication. For example, a user can register a schedule or a task in advance through the schedule management application, and when registered, at least one member, date, time, and related content in association with the schedule or the task may be recorded. Herein, the member may be recorded as one of a name, a phone number, an SNS ID, an e-mail address, and a messenger ID, or may be selected from a contact list.

According to an importance of the received incoming communication, the application processor 1002 may change an incoming mode, regulate a volume of a bell sound or a level of a vibration strength, or regulate a speed of a lamp flickering, and may perform an incoming notification with a bell sound volume or vibration strength regulated in the incoming mode, as described above with respect to FIGS. 2-8.

Another processor may include one or more data processors, an image processor, or a codec. The data processor, the image processor, or the codec can be configured separately. In addition, these elements can be configured as several processors each of which performs a different function. The interface 1001 is connected to the touch screen controller 1065 of the electronic device and the extended memory 1070.

The sensor module 1050 coupled to the interface 1001 can enable various functions. For example, a motion sensor and an optical sensor can be coupled to the interface 1001 to respectively enable motion sensing and external light-beam sensing. In addition thereto, other sensors such as, for example, a location measurement system, a temperature sensor, a biometric sensor, or the like can be coupled to the interface 1001 to perform related functions.

The camera 1020 is coupled to the sensor module 1050 via the interface 1001, and can perform a camera function such as photographing, video clip recording, etc.

The RF processor 1040 performs a communication function. For example, an RF signal is converted to a baseband signal under the control of the communication processor 1003, and is then provided to the communication processor 1003, or a baseband signal from the communication processor 1003 is transmitted by being converted into an RF signal.The communication processor 1003 processes the baseband signal by using various communication schemes. For example, although not limited thereto, the communication scheme may include a Global System for Mobile Communication (GSM) communication scheme, an Enhanced Data GSM Environment (EDGE) communication scheme, a Code Division Multiple Access (CDMA) communication scheme, a W-Code Division Multiple Access (W-CDMA) communication scheme, a Long Term Evolution (LTD) communication scheme, an Orthogonal Frequency Division Multiple Access (OFDMA) communication scheme, a Wireless Fidelity (Wi-Fi) communication scheme, a WiMax communication scheme, and/or a Bluetooth communication scheme.

The speaker/microphone 1010 may input and output an audio stream such as, for example, voice recognition, voice reproduction, digital recording, and telephony functions. That is, the speaker/microphone 1010 converts an audio signal into an electronic signal or converts the electronic signal into the audio signal. Although not shown, an attachable and detachable ear phone, headphone, or headset can be connected to the electronic device via an external port.

The touch screen controller 1065 can be coupled to the touch screen 1060. Although not limited thereto, the touch screen 1060 and the touch screen controller 1065 can use not only capacitance, resistance, infrared and surface sound wave techniques for determining one or more contact points but also any multi-touch sense technique including other proximity sensor arrays or other elements to detect a contact, a movement, or stopping thereof.

The touch screen 1060 provides an input/output interface between the electronic device and the user. That is, the touch screen 1060 delivers a touch input of the user to the electronic device. In addition, the touch screen 1060 is a medium that shows an output from the electronic device to the user. That is, the touch screen shows a visual output to the user. Such a visual output is represented in the form of a text, a graphic, a video, and a combination thereof.

A variety of displays can be used as the touch screen 1060. For example, although not limited thereto, the touch screen 1060 may include a Liquid Crystal Display (LCD), a Light Emitting Diode (LED), a Light Emitting Polymer Display

(LPD), an Organic Light Emitting Diode (OLED), an Active Matrix Organic Light Emitting Diode (AMOLED), or a Flexible LED (FLED).

The GPS receiver 1030 converts a signal received from a satellite into information of a location, a speed, a time, etc. For example, a distance between the satellite and the GPS receiver is calculated by multiplying a speed of light by a signal arrival time, and a location of the electronic device is measured according to a principle of a well-known triangulation by obtaining a distance and a correct location of three satellites.

The extended memory 1070 or the internal memory 1004 may include a fast random access memory such as one or more magnetic disc storage devices and/or a non-volatile memory, one or more optical storage devices, and/or a flash memory (e.g., NAND, NOR).

The extended memory 1070 or the internal memory 1004 stores a software component. The software component includes an operating system software module, a communication software module, a graphic software module, a user interface software module, a Moving Picture Experts Group (MPEG) module, a camera software module, one or more application software modules, etc. In addition, since a module, i.e., a software component, can be expressed as a group of instructions, the module can also be expressed as an instruction set. The module is also expressed as a program.

The operating system software includes various software components for controlling a general system operation. The control of the general system operation includes memory management and control, storage hardware (device) control and management, power control and management, etc. In addition, the operating system software performs a function for facilitating communication between various hardware elements (devices) and software elements (modules).

The communication software module can enable communication with other electronic devices such as a computer, a server, and/or a portable terminal via the RF processor 1040. Further, the communication software module consists of a protocol structure conforming to a corresponding communication scheme.

The graphic software module includes various software components for providing and displaying graphics on the touch screen 1060. The terminology of "graphics" indicates a text, a web page, an icon, a digital image, a video, an animation, etc.

The user interface software module includes various software components related to the user interface. The user interface software module includes the content related to how a state of the user interface changes and in which condition the state of the user interface changes.

The camera software module includes a camera-related software component which enables camera-related processes and functions. The application module includes a browser, an e-mail, an instant message, word processing, keyboard emulation, an address book, a touch list, a widget, a Digital Right Management (DRM), voice recognition, voice reproduction, a location determining function, a location-based service, etc. The memories 1070 and 1004 may further include additional modules (instructions) in addition to the aforementioned modules. Alternatively, optionally, some of the modules (instructions) may not be used.

The application module of the present invention may include instructions (see FIG. 2 to FIG. 9) for a method of notifying an incoming communication.

In various exemplary embodiments, the increment of the incoming notification level may be pre-set by the user, or may be influenced by a surrounding environmental noise (e.g., the increment is high in a noisy environment, and is low in a quiet environment) of the electronic device, a location (e.g., it operates in a vibration mode in case of a cinema) of the electronic device, and a distance (e.g., if a distance between the user and the electronic device is great, the increment is high, and if the distance between the user and the electronic device is small, the increment is low) between the user and the electronic device. The distance between the user and the electronic device may be measured by using a Bluetooth Low Energy (BLE) tag or a distance measuring sensor, and various exemplary embodiments are not limited thereto, and thus other methods may also be used for measuring.

Methods based on the embodiments of the present invention can be implemented in hardware, software, or a combination of both.

When implemented in software, computer readable recording medium for storing one or more programs (i.e., software modules) can be provided. The one or more programs stored in the computer readable recording medium are configured for execution performed by one or more processors in the electronic device. The one or more programs include instructions for allowing the electronic device to execute the methods based on the embodiments of the present invention.

The program (i.e., the software module or software) can be stored in a random access memory, a non-volatile memory including a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs) or other forms of optical storage devices, and a magnetic cassette. Alternatively, the program can be stored in a memory configured in combination of all or some of these storage media. In addition, the configured memory may be plural in number.

Further, the program can be stored in an attachable storage device capable of accessing the electronic device through a communication network such as the Internet, an Intranet, a Local Area Network (LAN), a Wide LAN (WLAN), or a Storage Area Network (SAN) or a communication network configured by combining the networks. The storage device can access via an external port to the electronic device.

In addition, an additional storage device on a communication network can access to the portable electronic device.

As described above, since an incoming notification level is automatically increased for an important incoming communication, a user can be prevented from missing the important incoming communication.

While the present invention has been shown and described with reference to certain embodiments thereof, it will be understood by those skilled in the art that various changes in form and detail may be made therein without departing from the spirit and scope of the present invention as defined by the appended claims.

## Claims

1. A method for providing a incoming notification in an electronic device, the method comprising the steps of:
receiving an incoming communication;
determining an importance of the incoming communication based on stored contact-related information; and
regulating an incoming notification level according to the importance of the incoming communication.

2. The method of claim 1,
wherein determining the importance of the incoming communication comprises determining whether contact information corresponding to the incoming communication coincides with contact information corresponding to at least one member related to a registered schedule or task, and
wherein regulating the incoming notification level comprises:
when the contact information corresponding to the incoming communication coincides with the contact information corresponding to the at least one member, performing the incoming notification by increasing the incoming notification level by at least one level higher than a currently configured incoming notification level; or
when the contact information corresponding to the incoming communication does not coincide with the contact information corresponding to the at least one member, performing the incoming notification with the currently configured incoming notification level.

3. The method of claim 1,
wherein determining the importance of the incoming communication comprises:
determining whether contact information corresponding to the incoming communication coincides with contact information corresponding to at least one member related to a registered schedule or task; and
when the contact information corresponding to the incoming communication coincides with the contact information corresponding to the at least one member, determining whether there is a missed incoming communication from at least one different member related to the registered schedule or task, and
wherein regulating the incoming notification level comprises:
when there is the missed incoming communication from the at least one different member, performing the incoming notification by increasing the incoming notification level by at least one level higher than a currently configured incoming notification level; and
when the contact information corresponding to the incoming communication does not coincide with the contact information corresponding to the at least one member or when there is no missed incoming communication from the at least one different member, performing the incoming notification with the currently configured incoming notification level.

4. The method of claim 1,
wherein determining the importance of the incoming communication comprises:
determining whether contact information corresponding to the incoming communication coincides with contact information corresponding to at least one member related to a registered schedule or task; and
when the contact information corresponding to the incoming communication coincides with the contact information corresponding to the at least one member, determining whether there is a missed incoming communication from at least one different member related to the registered
schedule or task, and
wherein regulating the incoming notification level comprises:
when there is the missed incoming communication from the at least one different member, performing the incoming notification by increasing the incoming notification level to a maximum incoming notification level;
when there is no missed incoming communication from the at least one different member, performing the incoming notification by increasing the incoming notification level by at least one level higher than a currently configured incoming notification level; and
when the contact information corresponding to the incoming communication does not coincide with the contact information corresponding to the at least one member, performing the incoming notification with the currently configured incoming notification level.

5. The method of claim 1,
wherein determining the importance of the incoming communication comprises determining whether there is a different incoming communication not received by different contact information of the same recipient, and
wherein regulating the incoming notification level comprises:
when there is the incoming communication not received by the different contact information of the same recipient, performing the incoming notification by increasing the incoming notification level by at least one level higher than a currently configured incoming notification level; and
when there is no incoming communication not received by the different contact information of the same recipient, performing the incoming notification with the currently configured incoming notification level.

6. The method of claim 5,
wherein the incoming communication is a phone communication, and the different incoming communication is an e-mail.

7. The method of claim 1,
wherein determining the importance of the incoming communication comprises determining an amount of missed incoming communications from multiple contact information of the same recipient, and
wherein regulating the incoming notification level comprises:
if the amount of missed incoming communications is greater than or equal to a threshold, performing the incoming notification by increasing the incoming notification level by at least one level higher than a currently configured incoming notification level; and
if the amount of missed incoming communications is less than the threshold, performing the incoming notification with the currently configured incoming notification level.

8. The method of claim 1,
wherein determining the importance of the incoming communication comprises determining an importance for contact information corresponding to the incoming communication, and
wherein regulating the incoming notification level comprises:
if the importance for the contact information is greater than or equal to a threshold, performing the incoming notification by increasing the incoming notification level by at least one level higher than a currently configured incoming notification level; and
if the importance of the contact is less than the threshold, performing the incoming notification with the currently configured incoming notification level.

9. An apparatus for providing an incoming notification of an electronic device, the apparatus comprising:
a Radio Frequency (RF) unit configured to receive an incoming communication; and
a controller configured to determine an importance of the incoming communication based on stored contact-related information, and regulate an incoming notification level according to the importance of the incoming communication.

10. The apparatus of claim 9, wherein the controller is further configured to determine whether contact information corresponding to the incoming communication coincides with contact information corresponding to at least one member related to a registered schedule or task, perform the incoming notification by increasing the incoming notification level by at least one level higher than a currently configured incoming notification level when the contact information corresponding to the incoming communication coincides with the contact information corresponding to the at least one member, and perform the incoming notification with the currently configured incoming notification level when the contact information corresponding to the incoming communication does not coincide with the contact information corresponding to the at least one member.

11. The apparatus of claim 9, wherein the controller is further configured to determine whether contact information corresponding to the incoming communication coincides with contact information corresponding to at least one member related to a registered schedule or task, determine whether there is a missed incoming communication from at least one different member related to the registered schedule or task when the contact information corresponding to the incoming communication coincides with the contact information corresponding to the at least one member, perform the incoming notification by increasing the incoming notification level by at least one level higher than a currently configured incoming notification level when there is the missed incoming communication from the at least one different member, and perform the incoming notification with the currently configured incoming notification level when the contact information corresponding to the incoming communication does not coincide with the contact information corresponding to the at least one member or when there is no missed incoming communication from the at least one different member.

12. The apparatus of claim 9, wherein the controller is further configured to determine whether contact information corresponding to the incoming communication coincides with contact information corresponding to at least one member related to a registered schedule or task, determine whether there is a missed incoming communication from at least one different member related to the registered schedule or task when the contact information corresponding to the incoming communication coincides with the contact information of the at least one member, perform the incoming notification by increasing the incoming notification level to a maximum incoming notification level when there is the missed incoming communication from the at least one different member, perform the incoming notification by increasing the incoming notification level by at least one level higher than a currently configured incoming notification level when there is no missed incoming communication from the at least one different member, and perform the incoming notification with the currently configured incoming notification level when the contact information corresponding to the incoming communication does not coincide with the contact information of the at least one member.

13. The apparatus of claim 9, wherein the controller is further configured to determine whether there is a second incoming communication not received by different contact information of the same recipient, perform the incoming notification by increasing the incoming notification level by at least one level higher than a currently configured incoming notification level when there is the incoming communication not received by the different contact information of the same recipient, and perform the incoming notification with the currently configured incoming notification level when there is no incoming communication not received by the different contact information of the same recipient.

14. The apparatus of claim 9, wherein the controller is further configured to determine an amount of missed incoming communications from multiple contact information of the same recipient, perform the incoming notification by increasing the incoming notification level by at least one level higher than a currently configured incoming notification level if the amount of missed incoming communications is greater than or equal to a threshold, and perform the incoming notification with the currently configured incoming notification level if the number of missed incoming communications is less than the threshold.

15. The apparatus of claim 9, wherein the controller is further configured to determine an importance for contact information corresponding to the incoming communication, perform the incoming notification by increasing the incoming notification level by at least one level higher than a currently configured incoming notification level if the importance for the contact information is greater than or equal to a threshold, and perform the incoming notification with the currently configured incoming notification level if the importance of the contact is less than the threshold.
